(19) Europäisches Patentamt
European Patent Office
Office européen des brevets

(11) Publication number: **0 226 675 B1**

(12) # EUROPEAN PATENT SPECIFICATION

(45) Date of publication of the patent specification: **25.07.90**

(51) Int. Cl.⁵: **C08F 16/12**, C08F 4/80

(21) Application number: **85309412.6**

(22) Date of filing: **23.12.85**

(54) **Ferricenium salt catalysts for vinyl ethers.**

(43) Date of publication of application: **01.07.87 Bulletin 87/27**

(45) Publication of the grant of the patent: **25.07.90 Bulletin 90/30**

(84) Designated Contracting States: **AT BE CH DE FR GB IT LI LU NL SE**

(56) References cited:
**EP-A- 0 109 851**
**US-A- 3 049 522**
**US-A- 4 525 553**
**US-A- 5 425 232**

**The file contains technical information submitted after the application was filed and not included in this specification**

(73) Proprietor: **LOCTITE (IRELAND) Ltd., Whitestown Industrial Estate, Tallaght, Co. Dublin 24(IE)**

(72) Inventor: **Rooney, John M., 76, The Paddocks, Naas CC. Kildare(IE)**
Inventor: **Conway, Paul, Herringwell Bury St. Edmunds, Suffolk(GB)**

(74) Representative: **Marchant, James Ian et al, Elkington and Fife Beacon House 113 Kingsway, London WC2B 6PP(GB)**

EP 0 226 675 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the polymerization of vinyl ether monomers.

Numerous methods of polymerizing vinyl ethers are known, including protonic acids, metal halides and stable carbocation salts. References describing cationic cure systems for vinyl ether resins include: U.S. Patents 3,196,098; 4,069,056; 4,192,924; 4,416,752 and U.S. 4,525,232, which mentions curing the vinyl ether resin by use of a ferrocene compound.

In EP-A-0 109 851 there are described actinic light/heat polymerizable compositions of a cationically polymerizable material and an ionic salt of an organometallic complex cation. One specific ferricenium salt is mentioned amongst a wide variety of other salts. The application is concerned with cyclic ethers and more particularly, epoxy resin compositions. The application speculates that the invention may also be applicable to N-vinyl compounds, ethylenically unsaturated hydrocarbons, cyclic formals, vinyl ethers and cyclic organosiloxanes all of which fall within the general term "cationically polymerizable material". There is no specific disclosure of the polymerization of vinyl ethers. In addition, the present applicants have now found that ferricenium salts, as defined below, will not induce polymerization of cyclic ethers even under combined photo and thermal initiation conditions more rigorous than described in EP-A-0 109 851.

It has now surprisingly been found that a ferricenium salt catalyst, as defined below, when combined with a vinyl ether monomer, gives a good room temperature curable composition. Vinyl ethers are known to polymerize only by a cationic mechanism and cationic polymerization are not known to be sensitive to atmospheric oxygen. Accordingly, it is a particularly surprising feature of the compositions according to the invention that the presence or absence of oxygen plays a big role in their polymerization. Thus when exposed to atmospheric oxygen the compositions according to the invention polymerize much more rapidly than they do when steps are taken to minimize or exclude exposure to atmospheric oxygen.

The present invention provides a curable composition comprising a mixture of at least one vinyl ether monomer and a ferricenium salt represented by the formula:

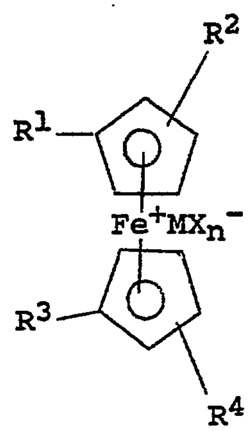

where $R^1$, $R^2$, $R^3$ and $R^4$, which may be the same or different, each represent H, an alkyl group or a linkage to a polymeric backbone; M is a metal or metalloid; X is a halogen; and n is an integer equal to 1 plus the valency of M.

The invention also provides a method of making the compositions according to the invention by generating the ferricenium salt in situ by addition of a trityl salt to a composition of vinyl ether monomer and a ferrocene compound.

A still further aspect of the invention is a method of forming a cured vinyl ether composition which comprises allowing a vinyl ether composition as defined above to cure.

The vinyl ether monomers useful in the compositions according to the invention may be represented by the formulas:

$(CH_2=CH-O-CH_2)_n-G$

$(CH_2=CH-O-C_6H_4)_n-G$

$(CH_2=CH-O-CR^1=CR^2)_n-G$

$(CH_2=CH-O-C\equiv C)_n-G$

or ketene acetals such as those of the formulas:

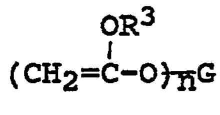 or 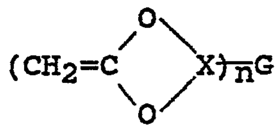

where G is a mono or multivalent radical free of groups, such as amino, substituted amino or phenol, which interfere with cationic or free radical polymerization; n is an integer greater than or equal to 1; $R^1$ and $R^2$ are selected from H, alkyl, substituted alkyl, aryl, and substituted aryl; $R^3$ is selected from alkyl, substituted alkyl, aryl, and substituted aryl; and X is a hydrocarbonyl group of 1-5 carbon atoms. In general, the inventive compositions will contain a substantial proportion of polyfunctional vinyl ether resins in order to produce solid cured products.

Ferricenium salts may be derived from the ferrocene or alkyl substituted ferrocenes such as n-butyl ferrocene, t-octyl ferrocene 1,1'-dibutyl ferrocene, and poly(vinyl ferrocene). A variety of methods for generating ferricenium salts from ferrocenes are known in the art. One useful method of generation is to add a trityl salt, such as triphenyl hexachloroantimonate, to ferrocene dissolved in a suitable solvent.

The trityl salt/ferrocene product may be prepared separately and added subsequently to a vinyl ether monomer composition. Thus, when ferrocene and triphenylmethylhexachloroantimonate are mixed under nitrogen in dry $CH_2Cl_2$ a dark blue precipitate forms immediately. This precipitate is air stable. Analysis shows the blue precipitate to be an equimolar mixture of ferricenium tetrachloroantimonite and ferricenium hexachloroantimonate.

The counter ions of ferricenium salts have the formula $MX_n^-$ where M denotes an atom of a metal or metalloid selected from antimony, phosphorus boron, arsenic, tin, or bismuth; X is a halide, preferably fluorine or chlorine; and n is an integer equal to 1 plus the valency of M. Examples of such complex anions include $BF_4^-$, $PF_6^-$, $AsF_6^-$, $SbF_6^-$, $SnCl_5^-$, $SbCl_4^-$, $SbCl_6^-$, etc.

An unusual aspect of the present invention is that the ferricenium salts do not initiate cure of other types of cationically curable monomers and resins, with the single apparent exception of N-vinyl carbazole and its analogs. Epoxy resins and 3,4-dimethoxystyrene are not cured by ferricenium salts.

The concentration of ferricenium salt in the inventive compositions is usefully in the range of 0,01% - 5 % by weight of the composition.

The invention may be illustrated by the following nonlimiting examples:

EXAMPLE 1

2.0 grams of 1,4-butanediol divinyl ether (BDVE) was poured into a 12mm X 75mm Pyrex test tube. A weighed amount of an equimolar mixture of ferricenium tetrachloroantimonite and ferricenium hexachloroantimonate (designated Initiator A) was added to the BDVE, a stopwatch was started and the mixture stirred vigorously for a few seconds. The tube was then placed in a rack and observed. No precautions to exclude atmospheric oxygen were taken. A period of inactivity during which the viscosity of the mixture remained unchanged was followed by a rapid and violent reaction which yielded a hard insoluble material after a few seconds. The length of the induction time for a variety of reaction conditions is listed in Table 1.

TABLE 1

| BDVE, g | Initiator A, g | Induction time, sec. |
|---|---|---|
| 2.0 | 0.020 | 198 |
| 2.0 | 0.010 | 235 |
| 2.0 | 0.005 | 572 |
| 2.0 | 0.003 | 1860 |

EXAMPLE 2

3.0 grams of a commercially available chlorosulfonated rubber (DuPont Hypalon 20) was dissolved in 10.0 grams of BDVE. 2.0 grams of this mixture was poured into a 12mm X 75mm Pyrex test tube, and 0.010 grams of Initiator A was added to the mixture. A stopwatch was started and the mixture was stirred for a few second. No precautions to exclude atmospheric oxygen were taken. After an induction time of 250 seconds during which there was no observable change in the viscosity of the mixture, a rapid and violent reaction occurred yielding a hard insoluble material.

EXAMPLE 3

1.0 gram of acetonitrile was poured into a 12 mm X 75 mm Pyrex test tube, and 1.0 gram of a vinyl ether as specified in Table 2 was added. After this mixture was stirred for a few seconds, 0.010 grams of Initiator A was added and a stop watch was started. The mixture was again stirred for a few seconds. No precautions were taken to exclude atmospheric oxygen. After an induction period during which no observable change in the viscosity of the solution occurred, a rapid and violent reaction ensued followed by the formation of an oily precipitate. The precipitate was characterized as a quantitative yield of low molecular weight vinyl ether polymer.

TABLE 2

| Vinyl Ether (g) | Induction Time, Sec |
|---|---|
| Ethyl (1.0) | 354 |
| n-butyl (1.0) | 567 |
| BDVE (1.0) | 698 |

EXAMPLE 4

Equal amounts of acetonitrile (2.0 grams) and n-butyl vinyl ether (1.5 grams) were added to two 12mm X 75 mm Pyrex test tubes. Into both mixtures 0.010 grams of Initiator A were added with stirring for a few seconds. The first test tube was then flushed with nitrogen and sealed, while no precautions to exclude atmospheric oxygen were taken with the second test tube. The contents of the second tube underwent a violent and rapid reaction after an induction time of 10-15 minutes, while the contents of the tube sealed under nitrogen underwent a similar reaction after an induction time of 75 minutes. In both cases an oily precipitate formed.

EXAMPLE 5

1.0 gram of BDVE was poured into a 12mm X 75m test tube, and 0.005 grams of an equimolar mixture of n-butyl ferricenium tetrachloroantimonite and n-butyl ferricenium hexachloroantimonate (Initiator B) was added and stirred for a few seconds. No special precautions were taken to exclude atmospheric oxygen. The induction time was 219 seconds. The experiment was repeated with 2.0 grams of BDVE and 0.005 grams of Initiator B. The induction time was 269 seconds.

EXAMPLE 6

2.0 grams of BDVE was poured into a 12mm X 75mm Pyrex test tube, and 0.010 grams of an equimolar mixture of t-octyl ferricenium tetrachloroantimonite and t-octyl ferricenium hexachloroantimonate (Initiator C) was added and stirred for a few seconds. No special precautions were taken to exclude atmospheric oxygen. The induction time was 762 seconds. The experiment was repeated with 2.0 grams of BDVE and 0.005 grams of Initiator C. The induction time was 1845 seconds.

EXAMPLE 7

1.0 gram of BDVE was poured into a 12mm X 75mm Pyrex test tube and 0.1 grams of a 1 percent solution of ferricenium hexafluorophosphate in acetonitrile was added. No special precautions were taken to exclude atmospheric oxygen. The induction time was 2260 seconds.

The following comparative examples illustrate the use of ferricenium salts as defined herein in epoxy monomer compositions.

Comparative Example 1

A composition containing 10 grams of 3,4-epoxycyclohexyl-methyl-3, 4-epoxycyclohexane carboxylate (ERL-4221, trademark of Union Carbide), 1 gram of acetonitrile, and 0.1 gram of an equimolar mixture of ferricenium hexachloroantimonate and ferricenium tetrachloroantimonite was prepared. A large drop of this composition was placed on a glass microscope slide and irradiated under a medium pressure mercury arc at an intensity of 50 mw/cm$^2$ (measured at 365 nm) for 12 minutes. The irradiated material was then heated at 100°C for 270 minutes in an oven. No cure was observed.

Comparative Example 2

The experiment outlined above was repeated except that the composition was irradiated under a Philips PF 813 650-watt tungsten-halogen lamp at a distance of 10 cm. No cure was observed.

## Claims

1. A curable composition comprising a mixture of at least one vinyl ether monomer and a ferricenium salt represented by the formula:

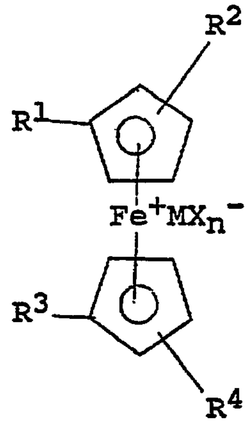

where $R^1$, $R^2$, $R^3$ and $R^4$, which may be the same or different, each represent H, an alkyl group or a linkage to a polymer backbone; M is a metal or metalloid; X is a halogen; and n is an integer equal to 1 plus the valency of M.

2. A composition as claimed in Claim 1, formed by addition of a trityl salt to a composition comprising a vinyl ether monomer and a ferrocene compound.

3. A composition as claimed in Claim 1 or 2 wherein M is arsenic, antimony, phosphorus, boron, tin or bismuth.

4. A composition as claimed in any of claims 1 to 3 where X is fluorine or chlorine.

5. A composition as claimed in Claim 1 or 2 wherein $MX_n^-$ is $BF_4^-$, $PF_6^-$, $AsF_6^-$, $SbF_6^-$, $SnCl_5^-$, $SbCl_4^-$, $SbCl_6^-$.

6. A composition as claimed in Claim 1 or 2 wherein $MX_n^-$ is $SbCl_6^-$, $SbCl_4^-$, $PF_6^-$, or mixtures thereof.

7. A composition as claimed in any of Claims 1 to 6 wherein the ferricenium salt is a salt of ferrocene, n-butyl ferrocene, t-octyl ferrocene, 1,1-dibutyl ferrocene or poly (vinyl ferrocene).

8. A composition as claimed in any of Claims 1 to 7 wherein the vinyl ether monomer is represented by one of the formulas:

$(CH_2{=}CH{-}O{-}CH_2)_n{-}G$

$(CH_2{=}CH{-}O{-}C_6H_4)_n{-}G$

$(CH_2{=}CH{-}O{-}CR^1{=}CR^2)_n{-}G$

$(CH_2{=}CH{-}O{-}C{\equiv}C)_n{-}G$

or is a ketene acetal of the formula:

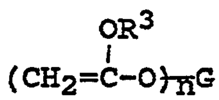 or 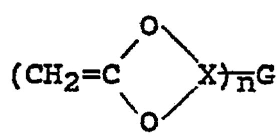

where G is a mono or multivalent radical free of groups which interfere with cationic or free radical polymerization; n is an integer greater than or equal to 1; $R^1$ and $R^2$ are H, alkyl, substituted alkyl, aryl, or substituted aryl; $R^3$ is alkyl, substituted alkyl, aryl, or substituted aryl; and X is a hydrocarbonyl group of 1 to 5 carbon atoms.

9. A method of forming a cured vinyl ether composition which comprises allowing a vinyl ether composition as claimed in any of claims 1 to 8 to cure.

10. A method as claimed in claim 9 wherein the composition is allowed to cure in presence of atmospheric oxygen.

## Patentansprüche

1. Härtbare Zusammensetzung, welche eine Mischung aus wenigstens einem Vinylethermonomer und einem durch die Formel wiedergegebenen Ferriceniumsalz umfaßt:

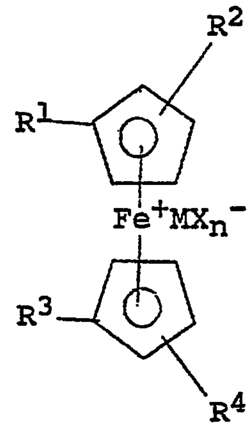

worin $R^1$, $R^2$, $R^3$ und $R^4$, die gleich oder verschieden sein können, jeweils H, eine Alkylgruppe oder eine Bindung an ein Polymergerüst darstellen; M ein Metall oder Metalloid ist; X ein Halogen ist; und n eine ganze Zahl ist, die 1 plus der Wertigkeit von M ist.

2. Zusammensetzung, wie in Anspruch 1 beansprucht, gebildet durch die Zugabe eines Tritylsalzes zu einer ein Vinylethermonomer und eine Ferrocenverbindung enthaltenden Zusammensetzung.

3. Zusammensetzung, wie in Anspruch 1 oder 2 beansprucht, worin M Arsen, Antimon, Phosphor, Bor, Zinn oder Wismut ist.

4. Zusammensetzung, wie in einem der Ansprüche 1 bis 3 beansprucht, worin X Fluor oder Chlor ist.

5. Zusammensetzung, wie in Anspruch 1 oder 2 beansprucht, worin $MX_n^-$ $BF_4^-$, $PF_6^-$, $AsF_6^-$, $SbF_6^-$, $SnCl_5^-$, $SbCl_4^-$, $SbCl_6^-$ ist.

6. Zusammensetzung, wie in Anspruch 1 oder 2 beansprucht, worin $MXn^-$ $SbCl_6^-$, $SbCl_4^-$, $PF_6^-$ oder eine Mischung davon ist.

7. Zusammensetzung, wie in einem der Ansprüche 1 bis 6 beansprucht, worin das Ferriceniumsalz ein Salz von Ferrocen, N-Nutylferrocen, t-Octylferrocen, 1,1-Dibutylferrocen oder Poly-(Vinylferrocen) ist.

8. Zusammensetzung, wie in einem der Ansprüche 1 bis 7 beansprucht, worin das Vinylethermonomer durch eine der Formeln wiedergegeben wird:

$(CH_2=CH-O-CH_2)_n-G$

$(CH_2=CH-O-C_6H_4)_n-G$

$(CH_2=CH-O-CR^1=CR^2)_n-G$

$(CH_2=CH-O-C\equiv C)_n-G$

oder ein Ketenacetal der Formel ist:

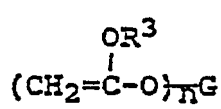

oder

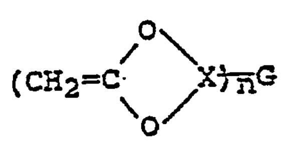

worin G ein ein- oder mehrwertiger Rest ist, der frei von Gruppen ist, die in die kationische oder freie Radikalpolymerisation eingreifen; n eine ganze Zahl ist, die größer als oder gleich 1 ist; $R^1$ und $R^2$ H, Alkyl, substituiertes Alkyl, Aryl oder substituiertes Aryl sind; $R^3$ Alkyl, substituiertes Alkyl, Aryl oder substituiertes Aryl ist; und X eine Hydrocarbonylgruppe mit 1 bis 5 Kohlenstoffatomen ist.

9. Verfahren zur Bildung einer gehärteten Vinyletherzusammensetzung durch Härtenlassen einer Vinyletherzusammensetzung, wie in einem der Ansprüche 1 bis 8 beansprucht.

10. Verfahren, wie in Anspruch 9 beansprucht, worin die Zusammensetzung in Gegenwart von atmosphärischem Sauerstoff härten gelassen wird.

**Revendications**

1. Une composition durcissable comprenant un mélange d'au moins un monomère éther vinylique et d'un sel de ferricénium répondant à la formule :

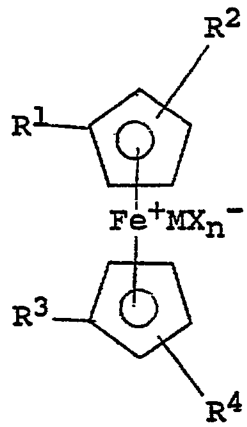

où $R^1$, $R^2$, $R^3$ et $R^4$, qui peuvent être identiques ou différents, représentent chacun H, un groupe alkyle ou une liaison à un squelette de polymère ; M est un métal ou un métalloïde, X est un halogène ; et n est un entier égal à 1 plus la valence de M.

2. Une composition selon la revendication 1, formée par addition d'un sel de trityle à une composition comprenant un monomère éther vinylique et un composé ferrocène.

3. Une composition selon la revendication 1 ou 2 dans laquelle M est l'arsenic, l'antimoine, le phosphore, le bore, l'étain ou le bismuth.

4. Une composition selon l'une quelconque des revendications 1 à 3 où X est le fluor ou le chlore.

5. Une composition selon la revendication 1 ou 2 dans laquelle $MX_n^-$ est $BF_4^-$, $PF_6^-$, $AsF_6^-$, $SbF_6^-$, $SnCl_5^-$, $SbCl_4^-$, $SbCl_6^-$.

6. Une composition selon la revendication 1 ou 2 dans laquelle $MX_n^-$ est $SbCl_6^-$, $SbCl_4^-$, $PF_6^-$ ou un mélange de ces ions.

7. Une composition selon l'une quelconque des revendications 1 à 6 dans laquelle le sel de ferricénium est un sel de ferrocène, de n-butyl ferrocène, de t-octyl ferrocène, de 1,1-dibutyl ferrocène ou de poly(vinyl ferrocène).

8. Une composition selon l'une quelconque des revendications 1 à 7 dans laquelle le monomère éther vinylique est représenté par l'une des formules :

$(CH_2{=}CH{-}O{-}CH_2)_n{-}G$

$(CH_2{=}CH{-}O{-}C_6H_4)_n{-}G$

$(CH_2{=}CH{-}O{-}CR^1{=}CR^2)_n{-}G$

$(CH_2{=}CH{-}O{-}C{\equiv}C)_n{-}G$

ou est un acétal de cétène répondant à la formule

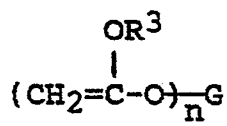 ou 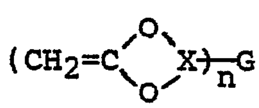

où G est un radical mono- ou multivalent dépourvu de groupes faisant obstacle à une polymérisation cationique ou par radicaux libres ; n est un entier supérieur ou égal à 1 ; $R^1$ et $R^2$ sont des atomes d'hydrogène, des groupes alkyles, alkyles substitués, aryles ou aryles substitués; $R^3$ est un groupe alkyle, alkyle substitué, aryle ou aryle substitué ; et X est un groupe hydrocarbonyle renfermant 1 à 5 atomes de carbone.

9. Un procédé de formation d'une composition à base d'éther vinylique durcie qui consiste à laisser durcir une composition à base d'éther vinylique selon l'une quelconque des revendications 1 à 8.

10. Un procédé selon la revendication 9 dans lequel on laisse durcir la composition en présence d'oxygène atomosphérique.